# EUROPÄISCHE PATENTANMELDUNG

(11) **EP 2 236 887 A2**
(43) Veröffentlichungstag der Anmeldung: **06.10.2010**
(21) Anmeldenummer: 10156172.8
(22) Anmeldetag: 11.03.2010
(51) Int. Cl.: F16L 5/04

(54) **Verfahren zur Befestigung eines bandförmigen Abdichtmittels an einem Bauteil**

(30) Priorität: 30.03.2009 DE 102009001961
(71) Anmelder: HILTI Aktiengesellschaft, 9494 Schaan (LI)
(72) Erfinder: Förg, Christian, 86862 Dillishausen (DE)

(57) **Zusammenfassung**

Die Erfindung betrifft ein Verfahren zur Befestigung eines bandförmigen Abdichtmittels (12) an einem Bauteil (6) zur Abdichtung einer Leitungsdurchführung mit mehreren Halteelementen (22), die jeweils einen Befestigungsschenkel (23) und einen Halteschenkel (26) mit einem freien Ende (27) aufweisen. Zuerst wird das Abdichtmittel (12) um die Leitung (7) gelegt, dann das freie Ende (27) jedes Halteelementes (22) umgebogen sowie an dem von der Bauteiloberfläche abgewandten Rand (14) des Abdichtmittels (12) angeordnet und anschliessend jedes Halteelement (22) an dem Bauteil (6) festgelegt.

## Beschreibung

Die Erfindung betrifft ein Verfahren zur Befestigung eines bandförmigen Abdichtmittels an einem Bauteil, der im Patentanspruch 1 genannten Art.

Leitungsdurchführungen, z. B. für Leitungen, wie Rohre, Kanäle, etc., in einem Bauteil, wie z. B. eine Wand oder Decke, werden abgedichtet, um beispielsweise in einem Brandfall ein Übertritt des Feuers oder des dabei entstehenden Rauchgases durch diese Leitungsdurchführung von einem Raum zu dem benachbarten Raum zu verhindern. Zur Brandabschottung wird z. B. ein Abdichtmittel verwendet, das intumeszierendes Material, wie z. B. Blähgraphit, enthält.

Aus der DE 198 52 120 A1 ist eine Brandschutzvorrichtung bekannt, die als Abdichtmittel eine biegbare und von einem biegsamen Mantelteil umgebene Brandschutzeinlage sowie mehrere Halteelemente umfasst, die jeweils einen Befestigungsschenkel und einen Halteschenkel mit einem freien Ende aufweisen. Am freien Ende des Halteschenkels ist eine vorgefertigte Abbiegung vorgesehen, welche einen U-förmigen Aufnahmeraum zum Umgreifen des von der Bauteiloberfläche abgewandten Randes des an der Leitung angeordneten Abdichtmittels ausbildet.

Nachteilig an der bekannten Lösung ist, dass die Halteelemente für eine ausreichende Befestigung des Abdichtmittels an dem Bauteil auf dessen Ausgestaltung abgestimmt sein müssen. Anpassungen vor Ort beziehungsweise bei der Montage z. B. an die örtlich vorhandenen Gegebenheiten sind hierbei nicht möglich.

Weiter ist zur Erstellung einer Abdichtung einer Leitungsdurchführung die Verwendung eines bandförmigen Abdichtmittels bekannt, das dem Anwender z. B. als ablängbares Endlosband zur Verfügung gestellt wird und das entsprechend des Grades der gewünschten Abdichtung der Leitungsdurchführung in einer entsprechenden Anzahl von Wicklungen um die Leitung wickelbar ist. Aus der DE 102 17 174 A1 werden zur Befestigung des bandförmigen Abdichtmittels an dem Bauteil mehrere L-förmige Halteelemente vorgesehen, die jeweils an ihrem Halteschenkel von diesem abragende, dornförmige Eindringabschnitte aufweisen. Beim Anordnen dieser Halteelemente dringen die Eindringabschnitte durch ein zuvor um das bandförmige Abdichtmittel herum angeordnete perforiertes Mantelteil hindurch in das Abdichtmittel ein. Diese Halteelemente gewährleisten eine sichere Fixierung des an der Leitung angeordneten Abdichtmittels am Bauteil.

Nachteilig an der bekannten Lösung ist, dass die dornförmigen Eindringabschnitte für eine sichere Befestigung eine ausreichend von dem Halteschenkel abragende grosse Erstreckung aufweisen müssen. Bei einem bandförmigen Abdichtmittel, das nur eine geringe Dicke aufweist oder nur in einer geringen Anzahl von Wicklungen an der Leitung angeordnet wird, sind diese Halteelemente zur Befestigung des bandförmigen Abdichtmittels an dem Bauteil nicht verwendbar.

Aufgabe der Erfindung ist es, ein Verfahren zur Befestigung eines bandförmigen Abdichtmittels an einem Bauteil zur Abdichtung einer Leitungsdurchführung in dem Bauteil mit mehreren Halteelementen zu schaffen, wobei diese Befestigung weitgehend unabhängig von der Dicke des verwendeten bandförmigen Abdichtmittels ist.

Die Aufgabe ist durch die Merkmale des unabhängigen Anspruchs gelöst. Vorteilhafte Weiterbildungen sind in den Unteransprüchen dargelegt.

Gemäss der Erfindung wird zuerst das Abdichtmittel um die Leitung gelegt; dann das freie Ende jedes Halteelementes zum Umgreifen des von der Bauteiloberfläche abgewandten Randes des an der Leitung angeordneten Abdichtmittels umgebogen sowie an diesem Rand des Abdichtmittels angeordnet und anschliessend jedes Halteelement an dem Bauteil festgelegt.

Mit diesem Verfahren sind bandförmige Abdichtmittel mit unterschiedlichen Dicken an einem Bauteil beziehungsweise an einem Untergrund befestigbar. Gleichzeitig kann eines der Halteelemente als Verschlusselement für das aussenliegende Bandende des bandförmigen Abdichtmittels dienen. Ein zusätzliches, an dem angeordneten Abdichtmittel aussenliegend vorgesehenes Fixierhilfselement, z. B. in Form eines Mantelteils aus einem perforierten Metallblech ist für eine ausreichende Fixierung des Abdichtmittels am Bauteil nicht mehr erforderlich. Mit diesem Verfahren lassen sich einlagige wie auch mehrlagige Abdichtmittel am Bauteil sicher fixieren. Des Weiteren sind mit diesem Verfahren auch Bandagierungen, d. h. Anordnungen des bandförmigen Abdichtmittels, an Leitungen aus einem weichen Material ohne weiteres möglich.

Insbesondere bei einem bandförmigen Abdichtmittel zur Brandabschottung, weist dieses vorteilhaft ein aussenseitig angeordnetes Trägermaterial, wie z. B. eine Gewebematte oder eine Metallfolie, auf, das in der Anfangsphase eines Brandfalls zumindest solange stehen bleibt, bis die intumeszierende Wirkung des Abdichtmittels abgeschlossen ist.

Vorzugsweise wird das umgebogene freie Ende eines Halteelementes zwischen das an der Leitung angeordnete Abdichtmittel und der Aussenwandung der Leitung geschoben, womit das Abdichtmittel in diesem Bereich vollständig umgriffen wird und sicher am Bauteil fixierbar ist.

Bevorzugt sind an dem Halteschenkel der Halteelemente jeweils Eindringabschnitte vorgesehen, die bei der Anordnung des Halteelementes an dem an der Leitung angeordneten Abdichtmittel in dieses bereichsweise eindringen. Die Eindringabschnitte weisen vorteilhaft eine von dem Halteschenkel abragende Erstreckung auf, die maximal der Dicke des festzulegenden bandförmigen Abdichtmittels entspricht.

Die Erfindung wird nachstehend anhand eines Ausführungsbeispiels näher erläutert. Es zeigen:
- Fig. 1: Eine montiertes Abdichtanordnung in der Aufsicht;
- Fig. 2: einen Teilschnitt durch die Abdichtanordnung gem. Fig. 1 entlang Linie II-II in;
- Fig. 3: ein Halteelement in perspektivischer Ansicht; und
- Fig. 4: das Halteelement gem. Fig. 3 mit umgebogenen freien Ende in perspektivischer Ansicht.

Grundsätzlich sind in den Figuren gleiche Teile mit den gleichen Bezugszeichen versehen.

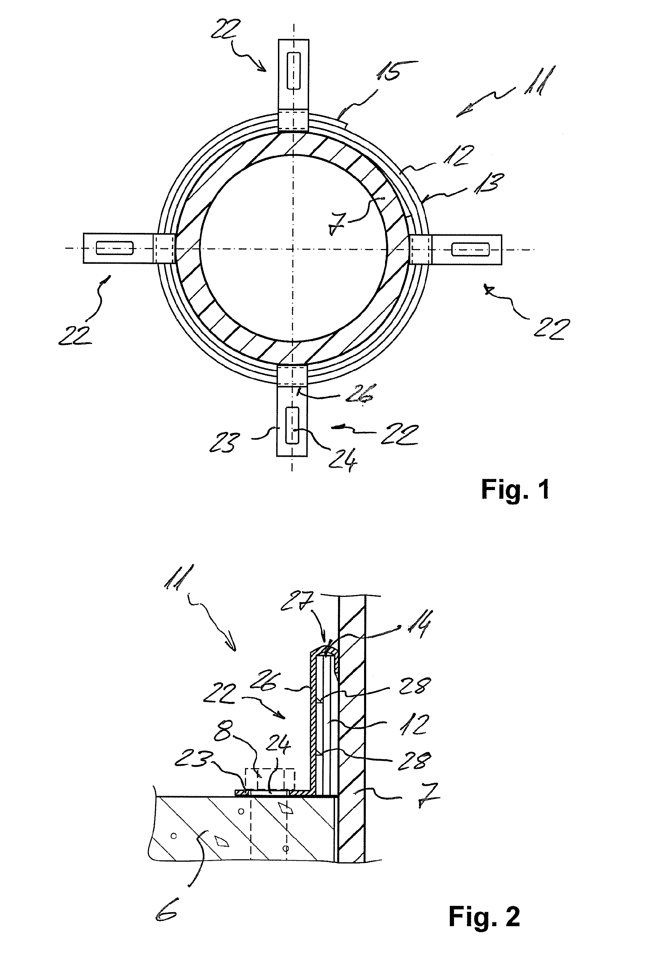

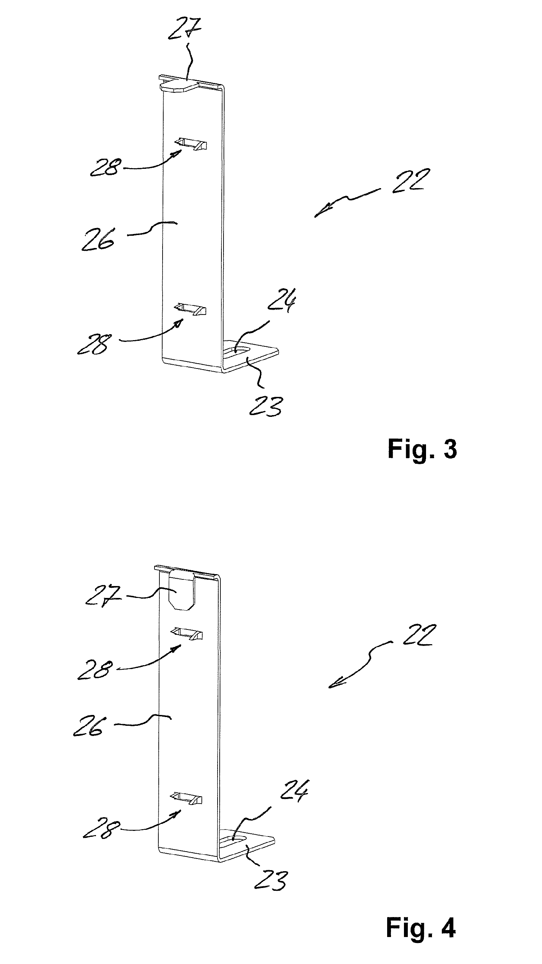

In den Figuren 1 und 2 ist eine montierte Abdichtanordnung 11 zur Abdichtung einer durch ein Bauteil 6 hindurchgeführten Leitung 7 als Brandschutzeinrichtung gezeigt. Die Abdichtanordnung 11 umfasst ein bandförmiges Abdichtmittel 12, das intumeszierendes Material aufweist und aussenseitig mit einem Gewebematerial 13 versehen ist. Weiter umfasst die Abdichtanordnung 11 mehrere Halteelemente 22, die jeweils einen Befestigungsschenkel 23 und einen Halteschenkel 26 mit einem freien Ende 27 aufweisen. Im Befestigungsschenkel 23 ist ein Langloch 24 zur Durchführung eines Befestigungsmittels 8 zur Fixierung des Halteelementes 22 am Bauteil 6 vorgesehen. Das freie Ende 27 des Halteschenkels 26 ist in der Breite kleiner als der übrige Halteschenkel 26 ausgebildet (siehe Fig. 3 und 4), womit in diesem Bereich eine Sollbiegestelle ausgebildet ist und somit das freie Ende 27 einfach umbiegbar ist. Die Halteelemente 22 sind Blechteile, die in einem Stanz-/Biegeverfahren gefertigt sind.

Zur Befestigung des bandförmigen Abdichtmittels 12 an dem Bauteil 6 wird zuerst das Abdichtmittel 12 mehrfach um die Leitung 7 gewickelt. Dann wird das freie Ende 27 jedes Halteelementes 22 zum Umgreifen des von der Bauteiloberfläche abgewandten Randes 14 des an der Leitung 7 angeordneten Abdichtmittels 12 umgebogen sowie an diesem Rand 14 des Abdichtmittels 12 angeordnet. Das umgebogene freie Ende 27 jedes Halteelementes 22 wird zwischen das an der Leitung 7 angeordnete Abdichtmittel 12 und der Aussenwandung der Leitung 7 geschoben (siehe Fig. 2).

Ein Halteelement 22 wird im Bereich des Bandendes 15 vorgesehen, so dass dieses gleichzeitig als Verschlusselement für das gewickelte Abdichtmittel 12 dient. Die übrigen Halteelemente 22 werden umfänglich gleichmässig verteilt an dem an der Leitung 7 angeordneten Abdichtmittel 12 angeordnet. Anschliessend wird jedes Halteelement 12 z. B. mit einer Betonschraube als Befestigungsmittel 8 an dem Bauteil 6 festgelegt.

Das freie Ende 27 jedes Halteelementes 22 wird vorteilhaft derart umgebogen, dass dieses im angeordneten Zustand des Halteelementes 22 den Rand 14 des Abdichtmittels 12 bereichsweise klemmend umgreift. In einer weiter vorteilhaften, hier nicht dargestellten Ausführung ist der Endbereich des freien Endes 27 mit mehreren, zueinander beabstandeten Sollbiegestellen versehen, womit das Halteelement 22 einfach an die entsprechende Anzahl von Lagen sowie an die entsprechende gewickelte Breite des bandförmigen Abdichtmittels 12 anpassbar ist.

An dem Halteschenkel 26 jedes Halteelementes 26 sind Eindringabschnitte 28 vorgesehen, die bei der Anordnung des Halteelementes 22 an dem Abdichtmittel 12 in dieses bereichsweise eindringen und zusätzlich fixieren.

## Patentansprüche

1. Verfahren zur Befestigung eines bandförmigen Abdichtmittels (12) an einem Bauteil (6) zur Abdichtung einer Leitungsdurchführung in dem Bauteil (6) mit mehreren Halteelementen (22), die jeweils einen Befestigungsschenkel (23) und einen Halteschenkel (26) mit einem freien Ende (27) aufweisen, wobei
zuerst das Abdichtmittel (12) um die Leitung (7) gelegt,
dann das freie Ende (27) jedes Halteelementes (22) zum Umgreifen des von der Bauteiloberfläche abgewandten Randes (14) des an der Leitung (7) angeordneten Abdichtmittels (12) umgebogen sowie an diesem Rand (14) des Abdichtmittels (12) angeordnet und
anschliessend jedes Halteelement (22) an dem Bauteil (6) festgelegt wird.

2. Verfahren nach Anspruch 1, **dadurch gekennzeichnet, dass** das umgebogene freie Ende (27) eines Halteelementes (22) zwischen das an der Leitung (7) angeordnete Abdichtmittel (12) und der Aussenwandung der Leitung (7) geschoben wird.

3. Verfahren nach Anspruch 1 oder 2, **dadurch gekennzeichnet, dass** an dem Halteschenkel (26) der Halteelemente (22) jeweils Eindringabschnitte (28) vorgesehen sind, die bei der Anordnung des Halteelementes (22) an dem an der Leitung (7) angeordneten Abdichtmittel (12) in dieses bereichsweise eindringen.
